# EUROPEAN PATENT APPLICATION

(11) **EP 2 352 156 A1**
(43) Date of publication of application: **03.08.2011**
(21) Application number: 09831622.7
(22) Date of filing: 11.11.2009
(51) Int. Cl.: H01G 4/228, H01G 2/04, H01G 4/224, H01G 4/38

(54) **CASE MOLD TYPE CAPACITOR**

(30) Priority: 10.12.2008 JP 2008314039
(71) Applicant: Panasonic Corporation, Kadoma-shi Osaka 571-8501 (JP)
(72) Inventor: HASHIBA,Yusuke, Osaka-shi, Osaka 540-6207 (JP); SAITO, Toshiharu, Osaka-shi, Osaka 540-6207 (JP)
(74) Representative: Kügele, Bernhard
(86) International application number: PCT/JP2009/006002
(87) International publication number: WO 2010/067514

(57) **Abstract**

In a case mold type capacitor, a first capacitor element and second and third capacitor elements are interconnected in parallel and are molded with a resin. One lead electrode of the first capacitor element is connected to a first main bus bar, and the other lead electrode is connected to a second main bus bar. One lead electrode of the second capacitor element is connected to the first main bus bar, and the other lead electrode is connected to one end of a first sub bus bar. One lead electrode of the third capacitor element is connected to the second main bus bar, and the other lead electrode is connected to one end of a second sub bus bar. The other end of the first sub bus bar and the other end of the second sub bus bar overlap each other outside the mold resin.

## Description

### TECHNICAL FIELD

The present invention relates to a case mold type capacitor (a mold-packaged capacitor) used in various electronic devices, electrical devices, industrial devices, and automobiles. More specifically, the present invention relates to a case mold type capacitor that is produced by storing, in a case, capacitor elements each formed of metalized films and optimal for smoothing, a filter, and a snubber of an inverter circuit for driving a motor of a hybrid automobile and by molding them with a resin.

### BACKGROUND ART

Recently, from the viewpoint of environmental protection, many electrical devices have been controlled by inverter circuits and the energy saving and efficiency increase have been performed. Especially, in automotive industry, technologies related to the energy saving and efficiency increase have been developed actively. For instance, hybrid vehicles (hereinafter referred to as "HEV") that travel selectively using a motor and an engine have been brought to the market.

The used voltage region of motors used in HEVs is high, hundreds of bolts. As capacitors used for such motors, metalized film capacitors having electric characteristics of high withstand voltage and low loss have received attention. In response to a demand of no maintenance in the market, metalized film capacitors of an extremely long service life have been apt to be employed.

Withstand voltage increase, current increase, and capacity increase are strongly required in the metalized film capacitors used in the HEVs. Therefore, case mold type capacitors have been developed and commercialized where a plurality of metalized film capacitors interconnected in parallel through bus bars are stored in a case and a mold resin is injected into the case.

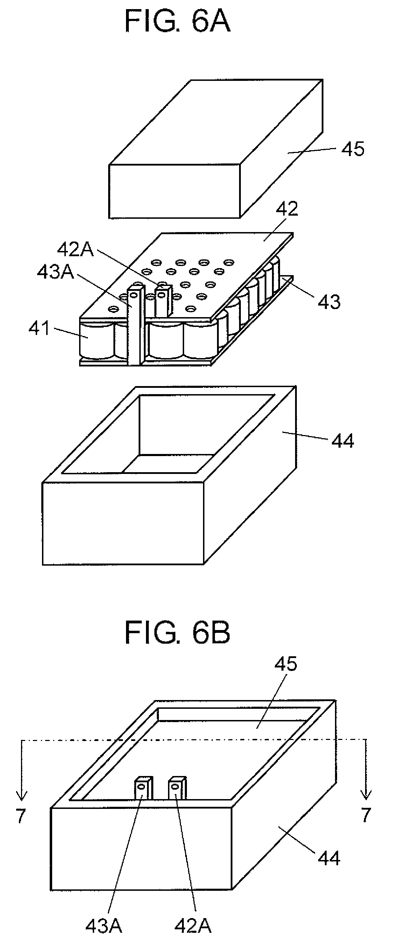

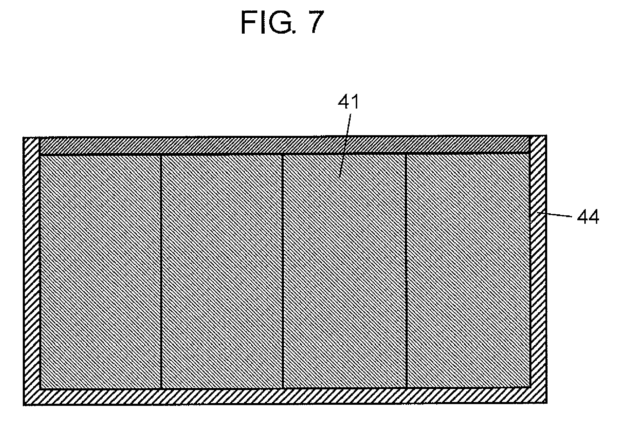

Fig. 6A is an exploded perspective view showing a structure of a conventional case mold type capacitor, Fig. 6B is a perspective view after assembling, and Fig. 7 is a sectional view taken in the line 7-7 of Fig. 6B. This mold type capacitor includes a plurality of metalized film capacitors (hereinafter referred to as "capacitors") 41, P-pole bus bar 42, N-pole bus bar 43, resin-made case 44, and mold resin 45.

Each capacitor 41 has a pair of metalized films. In each metalized film, a metal deposition electrode is formed on one surface or both surfaces of a dielectric film (not shown) made of polypropylene. These metal deposition electrodes are wound in a state where they face each other via the dielectric film. In each metalized film capacitor (hereinafter referred to as "capacitor") 41, a pair of lead electrodes, namely a P-pole (positive electrode) and an N-pole (negative electrode), are produced by forming a metallikon electrode where molten zinc is sprayed to both wound end surfaces.

One end of P-pole bus bar 42 has P-pole terminal 42A for external connection. P-pole bus bar 42 is coupled with a P-pole formed on one end surface of each capacitor 41 in a state where capacitors 41 are closely arranged. P-pole terminal 42A is pulled above capacitors 41 and projected from case 44.

One end of N-pole bus bar 43 has N-pole terminal 43A for external connection. N-pole bus bar 43 is also coupled with an N-pole formed on the other end surface of each capacitor 41, similarly to P-pole bus bar 42. N-pole terminal 43A is also pulled above capacitors 41 and exposed out of case 44. Thus, capacitors 41 are interconnected in parallel using P-pole bus bar 42 and N-pole bus bar 43.

Mold resin 45 is filled in case 44. Capacitors 41 which are interconnected in parallel using P-pole bus bar 42 and N-pole bus bar 43 and stored in case 44 are buried in mold resin 45.

Thus, in the conventional case mold type capacitor, capacitors 41 are molded in case 44 with mold resin 45. The conventional case mold type capacitor therefore has high mechanical strength, high heat resistance, and high humidity resistance. Such a conventional case mold type capacitor is disclosed in Patent Literature 1, for example.

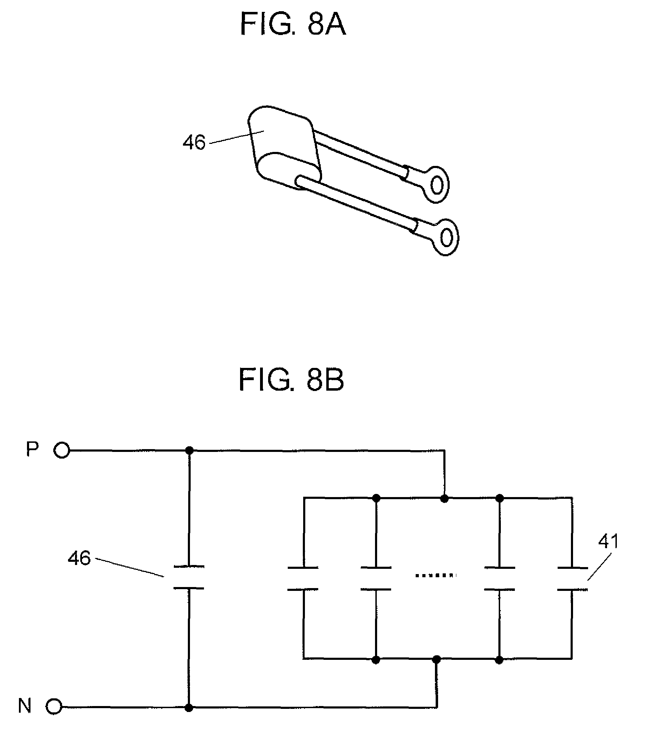

When the conventional case mold type capacitor is mounted in an HEV, separately prepared independent capacitor 46 (Fig. 8A) for removing noise is externally added to P-pole terminal 42A and N-pole terminal 43A by clamping or the like. In other words, a circuit as shown in Fig. 8B is formed. This structure is spatially enlarged and increases the cost. Users therefore have demanded that capacitor 46 for removing noise is built in the case mold type capacitor.

Capacitors 41 molded in case 44 with the resin are smoothing capacitors. When capacitor 46 for removing noise is built in the case mold type capacitor, smoothing capacitors 41 and capacitor 46 for removing noise are interconnected in parallel in mold resin 45. In this state, however, the characteristics of smoothing capacitors 41 and capacitor 46 for removing noise cannot be inspected individually.

### CITATION LIST

Patent Literature
Patent Literature 1: Unexamined Japanese Patent Publication No. 2004-146724

### SUMMARY OF THE INVENTION

The present invention provides a case mold type capacitor where characteristics such as capacitance and dielectric tangent (tan δ) of capacitor elements can be inspected after they are stored in a case and molded with a resin.

The case mold type capacitor of the present invention includes a first capacitor element, a second capacitor element, a third capacitor element, a first main bus bar, a second main bus bar, a first sub bus bar, a second sub bus bar, a case, and a mold resin. The first capacitor element has a first electrode and a second electrode. The second capacitor element has a function different from that of the first capacitor element, and has a third electrode and a fourth electrode. The third capacitor element has the same function as that of the second capacitor element, and has a fifth electrode and a sixth electrode. The first main bus bar connects the first electrode of the first capacitor element to the third electrode of the second capacitor element, and the second main bus bar connects the second electrode of the first capacitor element to the fifth electrode of the third capacitor element. The first sub bus bar has a first end and a second end, and is connected to the fourth electrode of the second capacitor element at the first end. The second sub bus bar has a third end and a fourth end, and is connected to the sixth electrode of the third capacitor element at the third end. The case stores the first, second, and third capacitor elements. The first, second, and third capacitor elements are buried in the mold resin so that a part of each of the first main bus bar and second main bus bar is exposed and so that the second end of the first sub bus bar and the fourth end of the second sub bus bar are exposed. The second end of the first sub bus bar and the fourth end of the second sub bus bar overlap each other outside the mold resin.

In this structure, the first and second sub bus bars can be electrically insulated from each other in an extremely easy method, such as a method of sandwiching an insulating sheet between the ends of the first and second sub bus bars exposed out of the mold resin. Therefore, even after two types of capacitor elements having different functions are interconnected and molded with a resin, electric characteristics such as capacitance and dielectric tangent (tan δ) of each capacitor element can be inspected.

### BRIEF DESCRIPTION OF DRAWINGS

Fig. 1A is a perspective view of a case mold type capacitor before resin molding in accordance with an exemplary embodiment of the present invention.
Fig. 1B is a front view of the case mold type capacitor before resin molding shown in Fig. 1A.
Fig. 1C is a bottom view of the case mold type capacitor before resin molding shown in Fig. 1A.
Fig. 2 is a front view of the case mold type capacitor after resin molding in accordance with the exemplary embodiment of the present invention.
Fig. 3 is an exploded perspective view showing components of the case mold type capacitor in accordance with the exemplary embodiment of the present invention.
Fig. 4 is a perspective view showing the assembled state of the components shown in Fig. 3.
Fig. 5A is a circuit diagram showing the configuration of the case mold type capacitor in accordance with the exemplary embodiment of the present invention.
Fig. 5B is a circuit diagram showing the configuration of another case mold type capacitor in accordance with the exemplary embodiment of the present invention.
Fig. 6A is an exploded perspective view of a conventional case mold type capacitor.
Fig. 6B is a perspective view of the conventional case mold type capacitor.
Fig. 7 is a sectional view taken in the line 7-7 of Fig. 6B.
Fig. 8A is a perspective view of a capacitor for removing noise used with the conventional case mold type capacitor.
Fig. 8B is a circuit diagram showing the actual use state of the conventional case mold type capacitor.

### DETAILED DESCRIPTION OF PREFERRED EMBODIMENTS

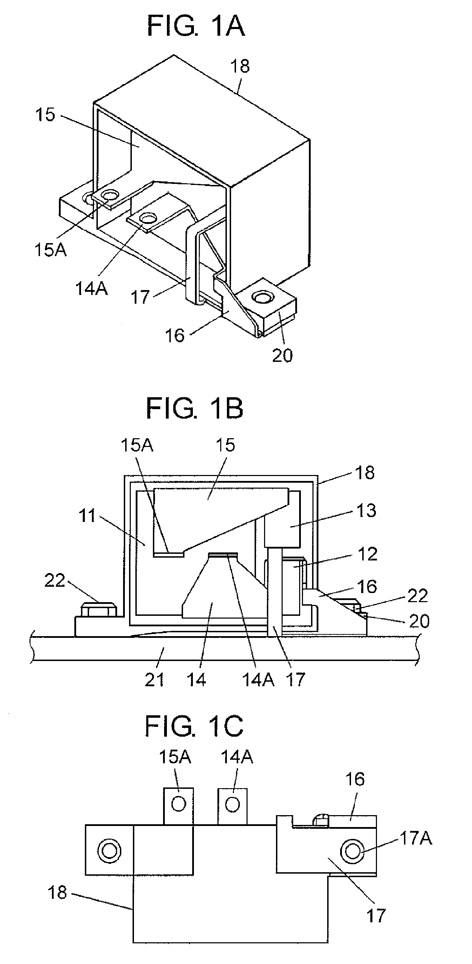

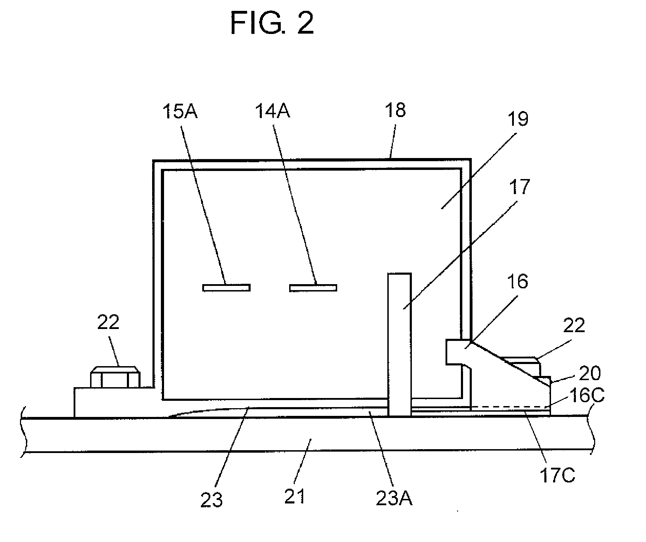

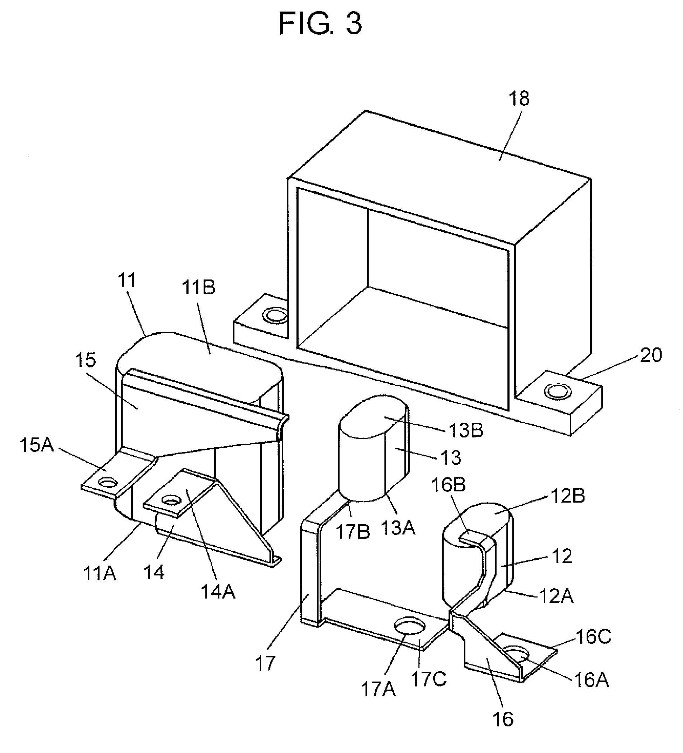

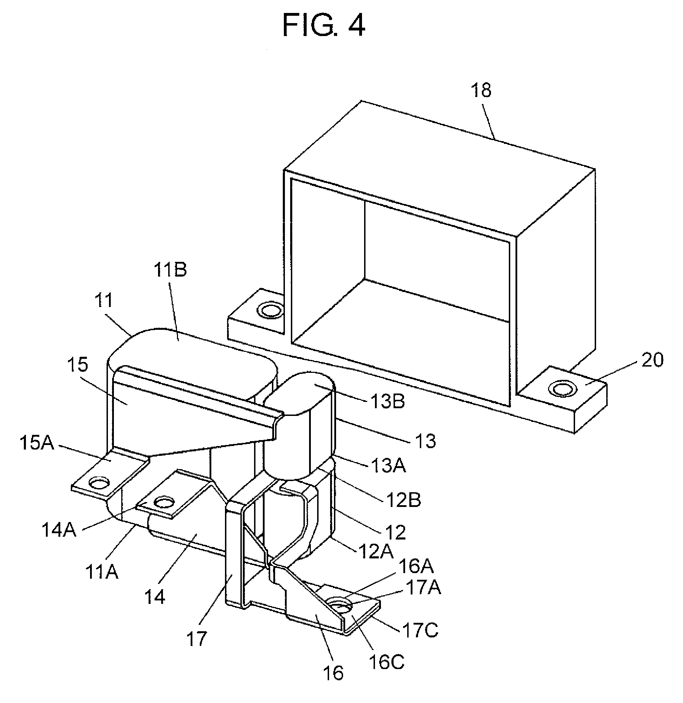

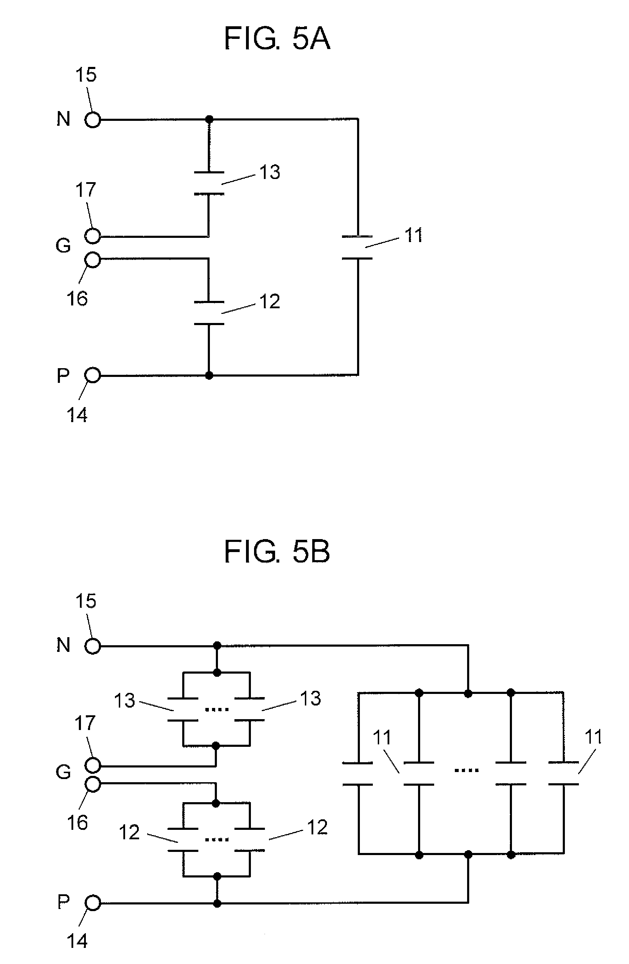

Fig. 1A through Fig. 1C are a perspective view, front view, and bottom view showing the structure of a case mold type capacitor before resin molding in accordance with an exemplary embodiment. Fig. 2 is a front view showing the structure of the case mold type capacitor after resin molding. Fig. 1B and Fig. 2 show the attached state of the case mold type capacitor to object body 21 to which the case mold type capacitor is mounted. Fig. 3 and Fig. 4 are exploded perspective views showing components of the case mold type capacitor before resin molding. Fig. 5A is a circuit diagram showing the configuration of the case mold type capacitor.

This case mold type capacitor includes first capacitor element 11, second capacitor element 12, third capacitor element 13, first main bus bar 14, second main bus bar 15, first sub bus bar 16, second sub bus bar 17, case 18, and mold resin 19.

As shown in Fig. 3, first capacitor element (hereinafter referred to as "first element") 11 has P-pole 11A as a first electrode and N-pole 11B as a second electrode. In the present exemplary embodiment, for example, a metalized film capacitor for smoothing used in an inverter circuit is used as first element 11.

First element 11 is formed of the metalized film capacitor. In other words, first element 11 has a pair of metalized films and metallikon electrodes (both are not shown). Each metalized film is produced by forming a metal deposition electrode (not shown) on one surface or both surfaces of a dielectric film (not shown) made of polypropylene, polyester, or the like. The pair of metalized films are wound in a state where the metal deposition electrodes face each other via the dielectric film. The metallikon electrodes are formed by spraying molten zinc or the like to both end surfaces on which the metalized films are wound. One of the metallikon electrodes as lead electrodes is P-pole 11A, and the other is N-pole 11B.

The function of second capacitor element (hereinafter referred to as "second element") 12 is different from that of first element 11. Second element 12 has P-pole 12A as the third electrode and ground electrode 12B as the fourth electrode. Here, P-pole 12A and ground electrode 12B are lead electrodes. Third capacitor element (hereinafter referred to as "third element") 13 has the same function as that of second element 12, and has N-pole 13B as the fifth electrode and ground electrode 13A as the sixth electrode. Here, N-pole 13B and ground electrode 13A are lead electrodes. In the present exemplary embodiment, for example, capacitors for removing noise generally called Y capacitors are used as second element 12 and third element 13. In other words, second element 12 and third element 13 supply noise signals from respective ground electrodes 12B and 13A to the ground. Each of second element 12 and third element 13, similarly to first element 11, is formed of a metalized film capacitor.

As shown in Fig. 4, first main bus bar 14 connects P-pole 11A of first element 11 to P-pole 12A of second element 12. Terminal part 14A is disposed at one end of first main bus bar 14. Terminal part 14A extends above P-pole 11A, exposed out of mold resin 19 as shown in Fig. 2, and projected from case 18 as shown in Fig. 1C.

Second main bus bar 15 connects N-pole 11B of first element 11 to N-pole 13B of third element 13. Terminal part 15A is disposed at one end of second main bus bar 15. Terminal part 15A extends below N-pole 11B, exposed out of mold resin 19, and projected from case 18.

As shown in Fig. 3, first sub bus bar 16 has first end 16B and second end 16C, and is connected to ground electrode 12B of second element 12 at first end 16B. Second end 16C is provided with attaching hole 16A. Attaching hole 16A and its periphery are one example of a coupling section for grounding, and they are exposed out of mold resin 19 as shown in Fig. 2 and projected from case 18.

Similarly, second sub bus bar 17 has third end 17B and fourth end 17C, and is connected to ground electrode 13A of third element 13 at third end 17B. Fourth end 17C is provided with attaching hole 17A. Attaching hole 17A and its periphery are one example of a coupling section for grounding, and they are exposed out of mold resin 19 and projected from case 18.

As shown in Fig. 2, resin-made case 18 stores first element 11, second element 12, and third element 13. First element 11, second element 12, and third element 13 that are interconnected in parallel using first main bus bar 14 and second main bus bar 15 are buried in mold resin 19. Terminal parts 14A and 15A as parts of first main bus bar 14 and second main bus bar 15 are exposed, and second end 16C of first sub bus bar 16 and fourth end 17C of second sub bus bar 17 are exposed. In other words, attaching hole 16A and its periphery that are disposed in second end 16C of first sub bus bar 16, and attaching hole 17A and its periphery that are disposed in fourth end 17C of second sub bus bar 17 are exposed out of mold resin 19. Second end 16C of first sub bus bar 16 and fourth end 17C of second sub bus bar 17 overlap each other outside mold resin 19.

Next, the structures of first main bus bar 14, second main bus bar 15, first sub bus bar 16, and second sub bus bar 17 are described in detail using the exploded perspective view of Fig. 3 that shows the assembling of the case mold type capacitor. First main bus bar 14 is coupled with P-pole 11A of first element 11 by a method such as soldering. Similarly, second main bus bar 15 is coupled with N-pole 11B of first element 11. First sub bus bar 16 is coupled with ground electrode 12B of second element 12 at first end 16B. Second end 16C is provided with attaching hole 16A. Similarly, second sub bus bar 17 is coupled with ground electrode 13A of third element 13 at third end 17B. Fourth end 17C is provided with attaching hole 17A.

As shown in Fig. 4, P-pole 12A of second element 12 is coupled with the right end of first main bus bar 14 that is coupled with P-pole 11A of first element 11. N-pole 13B of third element 13 is coupled with the right end of second main bus bar 15 that is coupled with N-pole 11B of first element 11. Thus, a circuit shown in Fig. 5A is formed.

The elements, the bus bars, and the bus bars for grounding that are integrally connected as discussed above are stored in case 18. Components except terminal part 14A of first main bus bar 14, terminal part 15A of second main bus bar 15, attaching hole 16A and its periphery of first sub bus bar 16, and attaching hole 17A and its periphery of second sub bus bar 17 are buried in mold resin 19. Thus, the case mold type capacitor shown in Fig. 2 is completed.

In this case mold type capacitor, first sub bus bar 16 connected to second element 12 and second sub bus bar 17 connected to third element 13 are independent. Therefore, even after first element 11, second element 12, and third element 13 are molded with a resin, the characteristics of elements 11 through 13 can be inspected individually before connecting sub bus bars 16 and 17.

Next, a method of inspecting the characteristics of first element 11, second element 12, and third element 13 is described in detail. First, in a state before the case mold type capacitor of the present exemplary embodiment is attached to object body 21, an insulating sheet (not shown) such as insulating paper is sandwiched between second end 16C of first sub bus bar 16 and fourth end 17C of second sub bus bar 17. Second end 16C of first sub bus bar 16 and fourth end 17C of second sub bus bar 17 overlap each other. Thus, first sub bus bar 16 is electrically insulated from second sub bus bar 17. In this state, the characteristics are measured as below.

As is clear from Fig. 5A, when the capacitance and dielectric tangent (tan δ) are measured between first main bus bar 14 and second main bus bar 15, the characteristics such as the capacitance and dielectric tangent of first element 11 can be inspected.

When the capacitance and dielectric tangent are measured between first main bus bar 14 and first sub bus bar 16, the characteristics such as the capacitance and dielectric tangent of second element 12 can be inspected. When the capacitance and dielectric tangent are measured between second main bus bar 15 and second sub bus bar 17, the characteristics of third element 13 can be inspected. Thus, when first sub bus bar 16 is electrically insulated from second sub bus bar 17, the characteristics of elements 11 through 13 can be independently inspected.

When the number of elements 11 is two or more, the number of elements 12 is two or more, and the number of elements 13 is two or more as shown in Fig. 5B, measuring the capacitance and dielectric tangent between first main bus bar 14 and second main bus bar 15 allows inspection of the composite capacitance and composite dielectric tangent of the plurality of first elements 11. Between first main bus bar 14 and first sub bus bar 16, the composite capacitance and composite dielectric tangent of the plurality of second elements 12 can be inspected. Between second main bus bar 15 and second sub bus bar 17, the composite capacitance and composite dielectric tangent of the plurality of third elements 13 can be inspected.

After the characteristics are inspected, the insulating sheet that electrically insulates first sub bus bar 16 from second sub bus bar 17 is removed, and attaching hole 16A of first sub bus bar 16 is overlaid on attaching hole 17A of second sub bus bar 17. In this state, screw 22 is inserted through attaching holes 16A and 17A from the upside of attaching leg 20 so as to be screwed into screw hole (not shown) disposed in object body 21, and object body 21 and attaching leg 20 are clamped by screw 22. This connecting allows the case mold type capacitor to be attached to object body 21 in a state where first sub bus bar 16 is mechanically and electrically connected to second sub bus bar 17. Attaching leg 20 is an attaching section for connecting the case mold type capacitor to object body 21.

The connecting sections disposed in second end 16C of first sub bus bar 16 and fourth end 17C of second sub bus bar 17 are not limited to attaching holes 16A and 17A and their peripheries. The connecting section may be produced by forming the tips of second end 16C and fourth end 17C in other shapes such as U shapes. When the case mold type capacitor is not removed after it is attached to object body 21, it may be calked with object body 21 using a rivet or the like so that the rivet penetrates second end 16C of first sub bus bar 16 and fourth end 17C of second sub bus bar 17. In this case, for example, a thin part as a connecting section is formed in each of second end 16C and fourth end 17C, and the rivet may be made to penetrate the thin parts.

As discussed above, in the case mold type capacitor of the present embodiment, first sub bus bar 16 and second sub bus bar 17 that are disposed independently overlap each other at an end outside mold resin 19, so that they can be easily separated from or connected to each other. This structure allows the characteristics of elements 11 through 13 to be independently measured in a separated state.

When attaching holes 16A and 17A constituting the connecting section for electrically connecting the case mold type capacitor to object body 21 are overlaid on each other, first sub bus bar 16 and second sub bus bar 17 can be easily, electrically coupled with object body 21. Thus, it is preferable that a connecting section for electrically connecting the case mold type capacitor to object body 21 is disposed in each of second end 16C of first sub bus bar 16 and fourth end 17C of second sub bus bar 17.

In addition, attaching holes 16A and 17A can be stacked on attaching surface 23 of attaching leg 20 disposed in case 18, so that all connections related to the grounding are enabled simply by mounting attaching leg 20 to object body 21 using screw 22. Thus, it is more preferable that an attaching section for binding the case mold type capacitor to object body 21 is disposed in case 18 and the connecting sections disposed in first sub bus bar 16 and second sub bus bar 17 are arranged to overlap each other on attaching surface 23 of the attaching section to object body 21. This structure can further improve the productivity.

Usually, a lead electrode is connected with a main bus bar or a sub bus bar for grounding by soldering. The thermal stress due to the soldering can change the characteristics of capacitance and dielectric tangent (tan δ) of each capacitor element. In addition to the thermal stress due to the soldering, thermal history or mechanical strain due to heat curing of a filled resin can change the characteristics of elements 11 through 13. In the case mold type capacitor of the present embodiment, however, when first sub bus bar 16 is separated (insulated) from second sub bus bar 17 by an easy method even after the resin molding, the characteristics of elements 11 through 13 can be independently inspected. Thus, defective products can be removed.

In the present embodiment, second element 12 and third element 13 as capacitors for removing noise and first element 11 as a smoothing capacitor are stored in case 18 and molded with a resin. Therefore, the whole capacitor unit can be downsized in an extremely simple structure comparing with the structure where a separate and independent capacitor for removing noise is added externally.

As shown in Fig. 2, it is preferable that attaching surface 23 to object body 21 is provided with recess 23A in which second end 16C of first sub bus bar 16 and fourth end 17C of second sub bus bar 17 are received. Here, second end 16C is provided with attaching hole 16A, and fourth end 17C is provided with attaching hole 17A. Thus, attaching leg 20 is not above second end 16C and fourth end 17C.

By making the height (depth) of recess 23A equal to the sum of the thicknesses of second end 16C and fourth end 17C, the case mold type capacitor can be stably attached to object body 21. Therefore, sub bus bars 16 and 17 can be electrically and mechanically fixed more certainly and stably.

In the present exemplary embodiment, the structure having one first element 11, one second element 12, and one third element 13 as shown in Fig. 5A has been described, but the present invention is not limited to this. As shown in the circuit diagram of Fig. 5B, the number of first elements 11 may be two or more, the number of second elements 12 may be two or more, and the number of third elements 13 may be two or more. In other words, a plurality of first elements 11 may be interconnected in parallel, a plurality of second elements 12 may be interconnected in parallel, and a plurality of third elements 13 may be interconnected in parallel. Alternatively, the structure may be employed where a plurality of second elements 12 are interconnected in parallel or a plurality of third elements 13 are interconnected in parallel. Interconnecting a plurality of capacitor elements in parallel allows required capacity to be obtained even when the required capacity cannot be obtained by one element due to limitation of the size of producible elements or restriction of the shape of the storage space.

Alternatively, the structure may be employed where a plurality of first elements 11 may be interconnected in parallel, the number of second elements 12 is one, and the number of third elements 13 is one. When the number of first elements 11 is two or more, the lateral lengths of first main bus bar 14 and second main bus bar 15 are sufficiently elongated so as to connect first elements 11 to second element 12 and third element 13 in parallel.

In the present exemplary embodiment, a smoothing capacitor is employed as first element 11, and capacitors for removing noise are employed as second element 12 and third element 13. However, the present invention is not limited to this. Capacitors for other application may be combined. Elements 11 through 13 are metalized film capacitors in the present embodiment, but another type of capacitors may be employed. Electronic components other than capacitors may be buried in mold resin 19.

### INDUSTRIAL APPLICABILITY

A case mold type capacitor of the present invention can be attached to an object body by interconnecting two independent sub bus bars. Therefore, even after resin molding, electric characteristics such as capacitance of each buried capacitor element can be inspected by insulating the sub bus bars from each other by an easy method. When the case mold type capacitor is attached to the object body after the characteristic inspection, the attaching holes of the sub bus bars can be overlaid on and coupled to each other and can be sandwiched and screwed between an attaching leg and the object body. The case mold type capacitor can be attached to the object body in this manner. Since attachment to the object body and coupling of a terminal can be performed simultaneously, the assembling man-hour can be reduced and the productivity can be improved. The case mold type capacitor of the present invention is useful especially for an on-vehicle capacitor.

### REFERENCE MARKS IN THE DRAWINGS

- 11: first capacitor element (first element)
- 11A: P-pole (first electrode)
- 11B: N-pole (second electrode)
- 12: second capacitor element (second element)
- 12A: P-pole (third electrode)
- 12B: ground electrode (fourth electrode)
- 13: third capacitor element (third element)
- 13A: ground electrode (sixth electrode)
- 13B: N-pole (fifth electrode)
- 14: first main bus bar
- 14A: terminal part
- 15: second main bus bar
- 15A: terminal part
- 16: first sub bus bar
- 16A: attaching hole
- 16B: first end
- 16C: second end
- 17: second sub bus bar
- 17A: attaching hole
- 17B: third end
- 17C: fourth end
- 18: case
- 19: mold resin
- 20: attaching leg (attaching section)
- 21.: object body
- 22: screw
- 23: attaching surface
- 23A: recess

## Claims

1. A case mold type capacitor comprising:
a first capacitor element having a first electrode and a second electrode;
a second capacitor element that has a function different from that of the first capacitor element, and has a third electrode and a fourth electrode;
a third capacitor element that has the same function as that of the second capacitor element, and has a fifth electrode and a sixth electrode;
a first main bus bar connecting the first electrode of the first capacitor element to the third electrode of the second capacitor element;
a second main bus bar connecting the second electrode of the first capacitor element to the fifth electrode of the third capacitor element;
a first sub bus bar that has a first end and a second end, and is connected to the fourth electrode of the second capacitor element at the first end;
a second sub bus bar that has a third end and a fourth end, and is connected to the sixth electrode of the third capacitor element at the third end;
a case storing the first capacitor element, the second capacitor element, and the third capacitor element; and
a mold resin in which the first capacitor element, the second capacitor element, and the third capacitor element are buried so that a part of each of the first main bus bar and the second main bus bar is exposed and the second end of the first sub bus bar and the fourth end of the second sub bus bar are exposed,
wherein the second end of the first sub bus bar and the fourth end of the second sub bus bar overlap each other outside the mold resin.

2. The case mold type capacitor of claim 1, wherein
each of the second end of the first sub bus bar and the fourth end of the second sub bus bar has a connecting section electrically connecting the case mold type capacitor to an object body.

3. The case mold type capacitor of claim 2, wherein
the case has an attaching section binding the case mold type capacitor to the object body,
the attaching section has an attaching surface to the object body, and the connecting sections of the first sub bus bar and the second sub bus bar overlap each other and are disposed on the attaching surface.

4. The case mold type capacitor of claim 3, wherein
the attaching surface to the object body is provided with a recess in which the second end of the first sub bus bar and the fourth end of the second sub bus bar are received.

5. The case mold type capacitor of claim 1, wherein
the first capacitor element is formed of a plurality of capacitor elements that are interconnected in parallel.

6. The case mold type capacitor of claim 1, wherein
the case mold type capacitor has at least one of a structure where the second capacitor element is formed of a plurality of capacitor elements that are interconnected in parallel and a structure where the third capacitor element is formed of a plurality of capacitor elements that are interconnected in parallel.

7. The case mold type capacitor of claim 1, wherein
the second end of the first sub bus bar and the fourth end of the second sub bus bar are grounded, and
the second capacitor element and the third capacitor element are used for removing noise from the second end and the fourth end.

8. The case mold type capacitor of claim 7, wherein
the first capacitor element is a smoothing capacitor.
